# EUROPEAN PATENT SPECIFICATION

(11) **EP 1 151 970 B1**
(45) Date of publication and mention of the grant of the patent: **23.02.2005**
(21) Application number: 01110450.2
(22) Date of filing: 27.04.2001
(51) Int. Cl.: C03B 9/16

(54) **Inverter unit for a machine for molding glass articles**
Umdrehmechanismus für eine Maschine zur Herstellung von Hohlglasgegenstände
Mécanisme d'inversion pour une machine de fabrication d' objets en verre creux

(30) Priority: 03.05.2000 IT TO000414
(43) Date of publication of application: 07.11.2001
(73) Proprietor: BOTTERO S.p.A., 12010 Cuneo (IT)
(72) Inventor: Armando, Lorenzo, 12100 Cuneo (IT); Bajo, Rolando, 36100 Vicenza (IT); Lisco, Gabriele, 36045 Almisano Di Lonigo Lonigo (IT)
(74) Representative: Cerbaro, Elena, Dr.

(56) References cited:
- US-A- 3 241 941
- US-A- 3 573 027

## Description

The present invention relates to an inverter unit for a machine for molding glass articles, and in particular for a so-called I.S. molding machine.

As is known, I.S. machines comprise a number of molding sections, each of which in turn comprises a parison mold, a finish mold, and an inverter unit between the parison and finish molds. The inverter unit comprises a supporting frame connected to the machine structure; and a gripping member, which grips the parisons formed in the parison mold, and is connected to the frame to rotate about a horizontal axis and transfer the parisons to the finish mold. The gripping member is normally rotated about the horizontal axis by a drive assembly comprising a gear transmission in turn comprising a gear coaxial with the rotation axis and angularly integral with the gripping member. The gear meshes with a worm, which is connected to the frame to rotate about a vertical axis and is connected to the output shaft of a respective vertical-axis electric drive motor. Alternatively, the gear meshes with a vertical rack moved by a linear actuator as disclosed in US-A-3 617 233.

Though widely used, known drive assemblies of the above type have the drawback of being extremely bulky in height and, above all, in a horizontal direction perpendicular to the rotation axis, and so occupying all the space between the relative molds.

Moreover, using a worm-helical gear or rack-and-pinion assembly, the worm/rack must be disconnected from the frame and/or motor/actuator to replace or service the motor/actuator, thus resulting in losses in terms of downtime and cost, while normal maintenance of the unit is a long, painstaking job when it calls for releasing the gripping member from angular connection to the worm/rack.

It is an object of the present invention to provide an inverter unit designed to provide a straightforward, low-cost solution to the above problems.

According to the present invention, there is provided an inverter unit for a machine for molding glass articles, the unit comprising a supporting frame; gripping means connected to the frame to rotate about a horizontal hinge axis and transfer, in use, parisons from a parison mold to a finish mold; a motor for powering said gripping means and having an output shaft rotating about a respective axis; and a mechanical transmission interposed between said motor and said gripping means; characterized in that the axis of said output shaft extends at a distance from said hinge axis and lies in a substantially horizontal plane.

A number of non-limiting embodiments of the present invention will be described by way of example with reference to the accompanying drawings, in which:
Figure 1 shows a view in perspective, with parts removed for clarity, of a first preferred embodiment of the inverter unit according to the present invention;
Figure 2 shows a partly sectioned side view of the Figure 1 unit;
Figure 3 shows a view in perspective, with parts removed for clarity, of a second preferred embodiment of the inverter unit according to the present invention;
Figure 4 shows a partly sectioned side view of the Figure 2 unit.

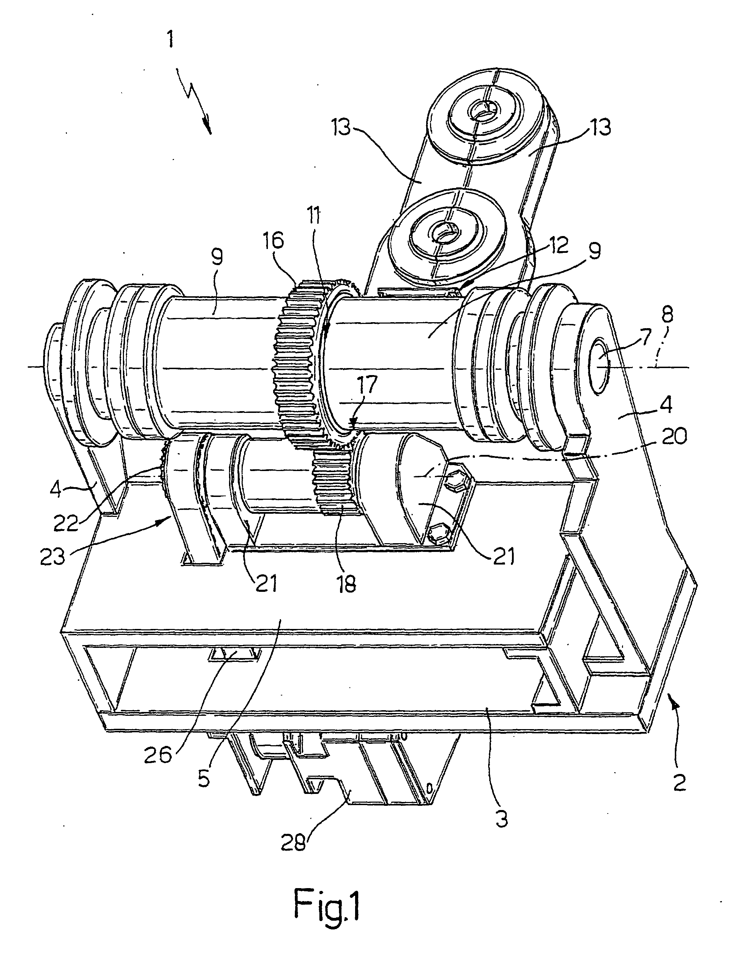

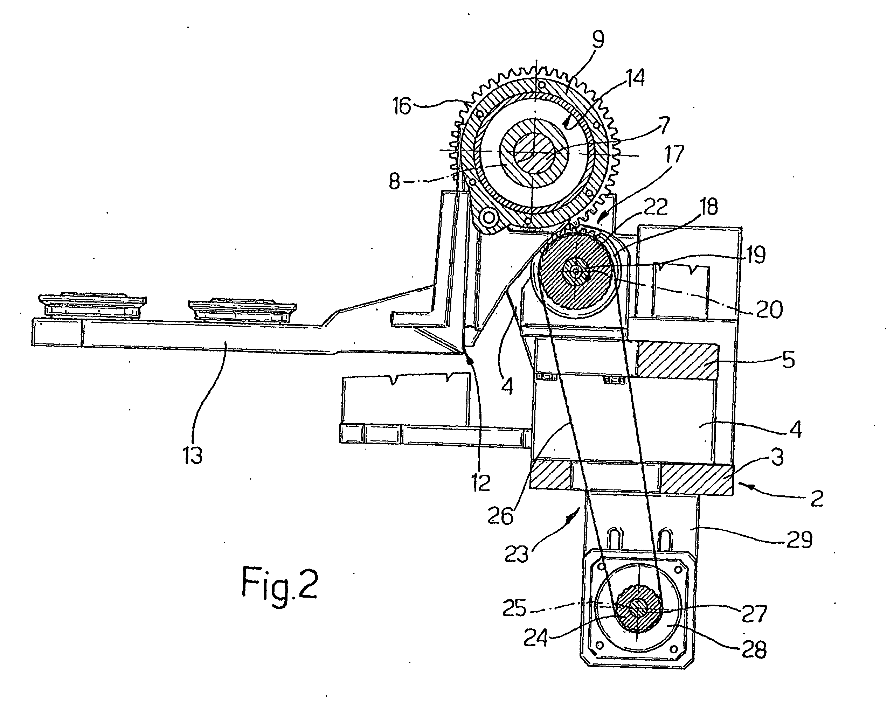

Number 1 in Figure 1 indicates as a whole an inverter unit for a so-called I.S. machine (not shown) for molding glass articles and comprising a parison mold (not shown) and a finish mold (not shown). Unit 1 provides for successively transferring one or more parisons (not shown) from the parison mold to the finish mold, and comprises a frame 2 in turn comprising an elongated bottom fastening plate 3 connected to a supporting structure of the machine (not shown), and two uprights 4 extending upwards from plate 3 and connected to each other by a platelike intermediate crosspiece 5 at a distance from plate 3. The free top ends of uprights 4 are fitted with a driven shaft 7, which rotates about a respective horizontal axis 8 and extends through two sleeves 9 extending adjacent to respective uprights 4 and connected in axially-sliding, angularly-fixed manner to shaft 7 by a known splined coupling 11 (Figure 1). Each sleeve 9 is fitted integrally - by means of a known releasable fastening device 12 not described in detail - with a respective known radial gripping member 13 - not described in detail - which, together with respective sleeve 9, is movable with respect to shaft 7 and in opposite directions along axis 8 by a respective known linear actuator interposed between shaft 7 and respective sleeve 9. A variable-volume chamber 14 of one of the linear actuators is shown in Figure 2.

Sleeves 9 are separated by a gear 16 fitted to an intermediate portion of shaft 7 and forming part of a mechanical transmission 17 for rotating gripping members 13 between a gripping position to pick up the parisons from the parison mold, and a release position to deposit the parisons inside the finish mold.

Transmission 17 also comprises a gear 18, which meshes with gear 16 and is fitted to an intermediate driven shaft 19 in turn fitted in axially-fixed manner to crosspiece 5 by means of two supports 21 so as to rotate about a respective axis 20 parallel to axis 8.

Shaft 19 has an end portion projecting from one of supports 21 and fitted with a pulley 22 of a belt transmission 23, which also comprises a second pulley 24 rotating about an axis 25 parallel to axes 8 and 20, and a toothed belt 26 looped about pulleys 22 and 24. Pulley 24 is fitted to a drive shaft 27 coaxial with axis 25 and forming the output shaft of a rotary horizontal-axis motor reducer 28, which extends beneath plate 3 and is connected adjustably to a supporting portion 29 connected integrally to plate 3 and extending downwards on the opposite side of plate 3 to uprights 4.

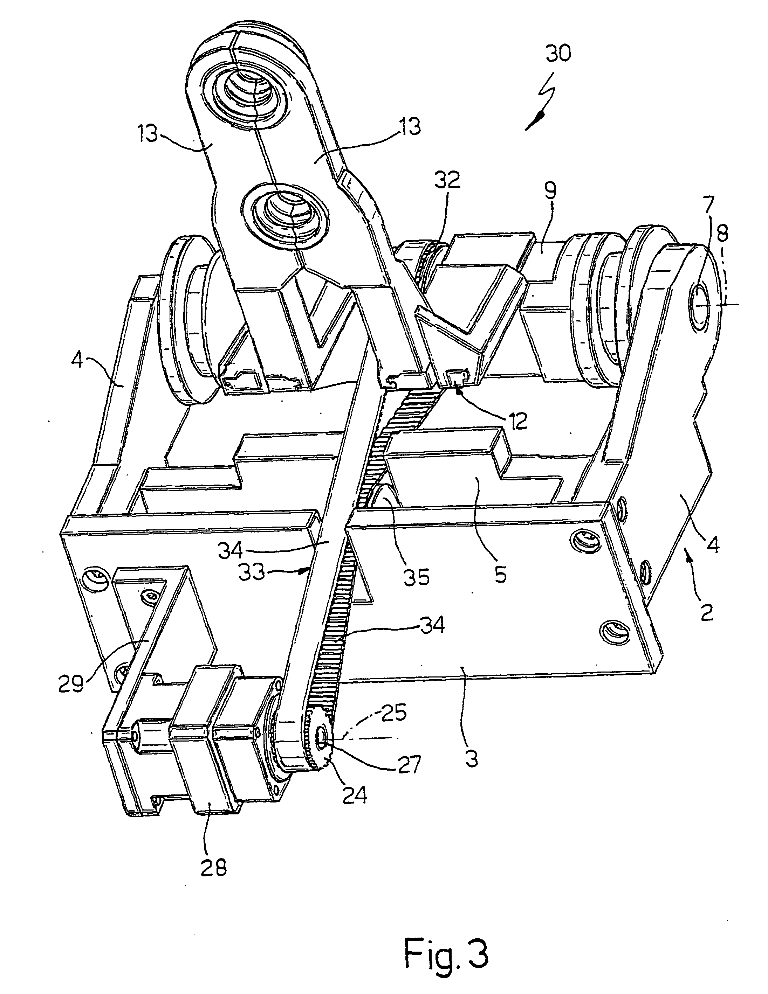

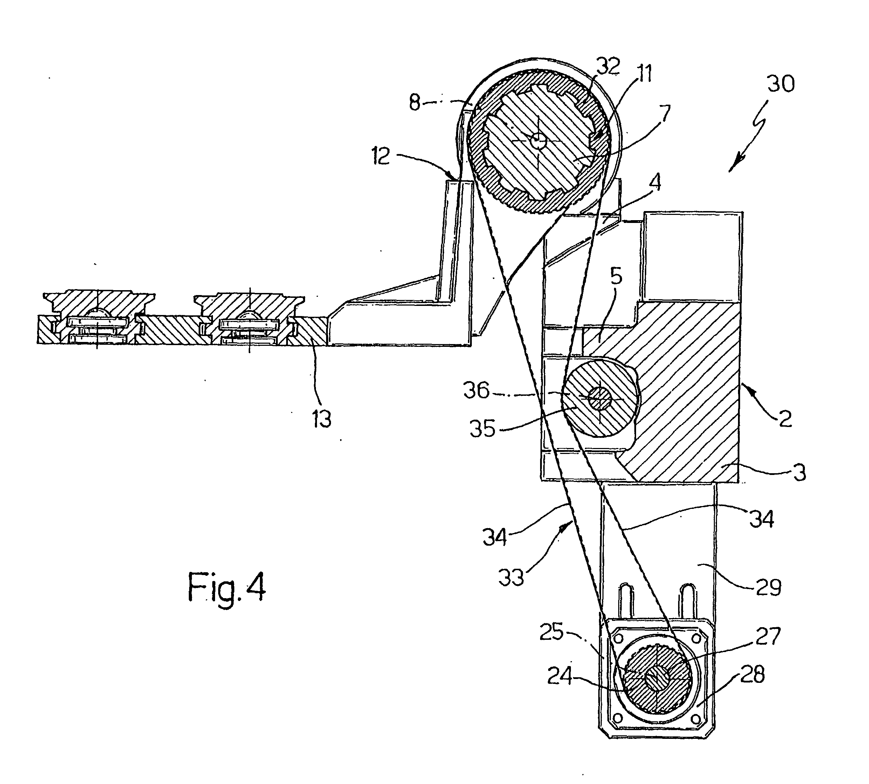

The Figure 3 and 4 embodiment relates to an inverting unit 30, which differs in certain design details from unit 1, and the component parts of which are indicated where possible using the same reference numbers as for the corresponding parts of unit 1.

Unit 30 differs from unit 1 by gear 16 being replaced with a toothed pulley 32; by driven shaft 19, gear 18 and pulley 22 being dispensed with; and by belt 26 being replaced with a belt 33 looped about pulleys 24 and 32. Belt 33 has two branches 34, one of which extends over an idle transmission roller 35 located between bottom plate 3 and crosspiece 5 and connected to frame 2 to rotate about an axis 36 parallel to axes 8 and 25.

As will be clear from the above, locating motor reducer 28 beneath bottom plate 3, and with its axis 25 parallel to the hinge axis 8 of gripping members 13, provides, unlike known solutions, for greatly reducing the transverse dimensions of units 1 and 30, and in particular in a direction perpendicular to axes 8 and 25.

By connecting motor reducer 28 directly to and entirely beneath frame 2, the whole of unit 1; 30 can be taken out and put back in one operation - since all the component parts of the unit are carried by the frame, and only bottom plate 3 needs connecting to the machine structure - and extremely easily, by both the motor and transmission being protected and so prevented from latching on to or knocking against other parts of the machine.

Moreover, using a toothed-belt transmission provides for releasing the shaft, and hence the gripping members, quickly and easily from angular connection to the motor reducer by simply removing the toothed belt, and for replacing the motor reducer and/or performing any other work on the unit extremely quickly. Using a toothed belt is also particularly advantageous by involving no noticeable slack, so that the efficiency and reliability of unit 1 are comparable with those of known units, while those of unit 30 are even greater by the linkage mechanism between the motor reducer and gripping members comprising none of the gear transmissions invariably featured in all known inverter units.

Moreover, a belt transmission provides for greatly enhancing the safety of the unit, by being more flexible than commonly used gear transmissions, so that the unit is arrested quickly in the event of any foreign bodies along the path of the gripping members.

As compared with known solutions, a belt transmission also provides for reducing the noise level of the unit and so improving working conditions.

Units 1 and 30 can be fitted to any existing machine with no alterations required to the machine structure, and in particular no structural alterations requiring further alterations to the machine to reassemble the original or any other known inverter unit.

Clearly, changes may be made to units 1 and 30 as described herein without, however, departing from the scope of the claims. In particular, the motor reducer may be positioned otherwise than as described by way of example, providing its axis lies in a horizontal plane parallel to and a distance from hinge axis 8; and the two gears in unit 1 may be replaced with a different type of mechanical transmission, e.g. a straightforward angular transmission, a belt transmission, or a worm-helical gear transmission. In the latter case, the axis of the motor extends perpendicularly to hinge axis 8.

## Claims

1. An inverter unit (1; 30) for a machine for molding glass articles, the unit (1) comprising a supporting frame (2); gripping means (13) connected to the frame (2) to rotate about a horizontal hinge axis (8) and transfer, in use, parisons from a parison mold to a finish mold; a motor (28) for powering said gripping means (13) and having an output shaft (27) rotating about a respective axis (25); and a mechanical transmission (17, 23; 33) interposed between said motor (28) and said gripping means (13); **characterized in that** the axis (25) of said output shaft (27) extends at a distance from said hinge axis (8) and lies in a substantially horizontal plane.

2. A unit as claimed in Claim 1, **characterized in that** the axis (25) of said output shaft (27) is parallel to said hinge axis (8).

3. A unit as claimed in Claim 1 or 2, **characterized in that** said frame (2) comprises a bottom fastening portion (3) for connection to a structure of said molding machine; the output shaft (27) of said motor (28) and said hinge axis (8) being located on opposite sides of said bottom fastening portion (3).

4. A unit as claimed in any one of the foregoing Claims, **characterized in that** said mechanical transmission (17, 23; 33) comprises belt transmission means (23; 33).

5. A unit as claimed in Claim 4, **characterized in that** said belt transmission means comprise a single transmission belt (26; 33).

6. A unit as claimed in Claim 5, **characterized in that** said transmission belt (26; 33) is a toothed belt.

7. A unit as claimed in Claim 6, **characterized in that** said mechanical transmission (17, 23; 33) also comprises a driven shaft (19; 7) parallel to the axis (25) of said output shaft (27); said belt transmission means comprising two pulleys (22; 32) (24), one fitted to said driven shaft (19; 7) and the other to said output shaft (27); and said belt (26; 33) being looped about said two pulleys (22; 32) (24);
said driven shaft being an intermediate shaft (19). extending parallel to and a transverse distance from said hinge axis (8); said mechanical transmission also comprising further transmission means (17) interposed between said intermediate shaft (19) and said gripping means.

8. A unit as claimed in Claim 7, **characterized in that** said further transmission means (17) are gear transmission means.

9. A unit as claimed in Claim 8, **characterized in that** said gear transmission means comprise one pair of gears (16)(18) meshing with each other.

10. A unit as claimed in Claim 6, **characterized in that** said mechanical transmission (17, 23; 33) also comprises a driven shaft (19; 7) parallel to the axis (25) of said output shaft (27); said belt transmission means comprising two pulleys (22; 32) (24), one fitted to said driven shaft (19; 7) and the other to said output shaft (27); and said belt (26; 33) being looped about said two pulleys (22; 32) (24); said driven shaft (7) extending coaxially with said hinge axis (8) and said gripping means (13) being carried by said driven shaft (7).

11. A unit as claimed in Claim 10, **characterized in that** said belt transmission means also comprise a transmission roller (35) located outwards of said belt (33) and along a branch (34) of the belt (33).

## Patentansprüche

1. Umdreheinheit (1, 30) für eine Maschine für Glasguss-Gegenstände, wobei die Einheit aufweist:
einen Abstützrahmen (2),
Greifmittel (13), die mit dem Rahmen (2) verbunden sind, um um eine horizontal Drehachse (8) zu rotieren und um bei der Verwendung Vorformlinge von einer Vorform-Gussform zu einer End-Gussform weiterzugeben,
einen Motor (28) zum Antrieben der Greifmittel (13), der eine Ausgangswelle (27) aufweist, die um eine zugehörige Achse (25) rotiert, und
ein mechanisches Getriebe (17, 23, 33), das zwischen dem Motor (28) und den Greifmitteln (13) angeordnet ist,
**dadurch gekennzeichnet, dass** sich die Achse (25) der Ausgangswelle (27) in einem Abstand von der Drehachse (8) erstreckt und in einer im Wesentlichen horizontalen Ebene liegt.

2. Einheit gemäß Anspruch 1, **dadurch gekennzeichnet, dass** die Achse (25) der Ausgangswelle (27) parallel zu der Drehachse (8) ist.

3. Einheit gemäß Anspruch 1 oder 2, **dadurch gekennzeichnet, dass** der Rahmen (2) einen unteren Befestigungsbereich (3) für eine Verbindung mit einer Struktur der Gussmaschine aufweist, wobei die Ausgangswelle (27) des Motors (28) und die Drehachse (8) auf sich gegenüber liegenden Seiten des unteren Befestigungsbereiches (3) angeordnet sind.

4. Einheit gemäß einem der vorangegangenen Ansprüche, **dadurch gekennzeichnet, dass** das mechanische Getriebe (17, 23, 33) Band-Getriebemittel (23, 33) aufweist.

5. Einheit gemäß Anspruch 4, **dadurch gekennzeichnet, dass** die Band-Getriebemittel ein einzelnes Getriebeband (26, 33) aufweisen.

6. Einheit gemäß Anspruch 5, **dadurch gekennzeichnet, dass** das Getriebeband (26, 33) ein Zahnriemen ist.

7. Einheit gemäß Anspruch 6, **dadurch gekennzeichnet, dass** das mechanische Getriebe (17, 23, 33) auch eine angetriebene Welle (19, 7) aufweist, die parallel zur Achse (25) der Ausgangswelle (27) ist, wobei das Band-Getriebemittel zwei Riemenscheiben (22, 32)(24) aufweist, von denen eine an der angetriebene Welle (19, 7) und die andere an der Ausgangswelle (27) befestigt ist, und das Band (26, 33) um die zwei Riemenscheiben (22, 32)(24) herum gewunden ist, wobei die angetriebene Welle eine zwischenliegende Welle (19) ist, die sich parallel und in einem Quer-Abstand zu der Drehachse (8) erstreckt, und das mechanische Getriebe ebenfalls weitere Getriebemittel (17) aufweist, die zwischen der zwischenliegenden Welle (19) und den Greifmitteln angeordnet sind.

8. Einheit gemäß Anspruch 7, **dadurch gekennzeichnet, dass** die weiteren Getriebemittel (17) Zahnrad-Getriebemittel sind.

9. Einheit gemäß Anspruch 8, **dadurch gekennzeichnet, dass** die Zahnrad-Getriebemittel ein Paar Zahnräder (16, 18) aufweisen, die ineinander greifen.

10. Einheit gemäß Anspruch 6, **dadurch gekennzeichnet, dass** das mechanische Getriebe (17, 23, 33) auch eine angetriebene Welle (19, 7) aufweist, die parallel zur Achse (25) der Ausgangswelle (27) ist, wobei das Band-Getriebemittel zwei Riemenscheiben (22, 32)(24) aufweist, von denen eine an der angetriebene Welle (19, 7) und die andere an der Ausgangswelle (27) befestigt ist, und das Band (26, 33) um die zwei Riemenscheiben (22, 32)(24) herum gewunden ist, wobei die angetriebene Welle (7) sich koaxial mit der Drehachse (8) erstreckt und die Greifmittel (13) von der angetriebene Welle (7) getragen werden.

11. Einheit gemäß Anspruch 10, **dadurch gekennzeichnet, dass** das Band-Getriebemittel auch eine Getriebe-Laufrolle (35) aufweist, die außerhalb des Bandes (33) und entlang der Bahn (34) des Bandes (33) angeordnet ist.

## Revendications

1. Unité inverseuse (1 ; 30) destinée à une machine destinée à mouler des articles en verre, l'unité (1) comprenant un cadre de support (2) ; des moyens de préhension (13) raccordés au cadre (2) pour tourner autour d'un axe charnière horizontal (8) et transférer, en utilisation, des ébauches à partir d'un moule ébaucheur vers un moule finisseur ; un moteur (28) destiné à entraîner lesdits moyens de préhension (13) et ayant un arbre de sortie (27) tournant autour d'un axe respectif (25) ; et une transmission mécanique (17, 23 ; 33) interposée entre ledit moteur (28) et lesdits moyens de préhension (13) ; **caractérisée en ce que** l'axe (25) dudit arbre de sortie (27) s'étend à une distance dudit axe charnière (8) et se situe dans un plan sensiblement horizontal.

2. Unité selon la revendication 1, **caractérisée en ce que** l'axe (25) dudit arbre de sortie (27) est parallèle audit axe charnière (8).

3. Unité selon la revendication 1 ou 2, **caractérisée en ce que** ledit cadre (2) comprend une partie de fixation inférieure (3) pour raccord à une structure de ladite machine de moulage ; l'arbre de sortie (27) dudit moteur (28) et ledit axe charnière (8) étant situés sur des côtés opposés de ladite partie de fixation inférieure (3).

4. Unité selon l'une quelconque des revendications précédentes, **caractérisée en ce que** ladite transmission mécanique (17, 23 ; 33) comprend un moyen de transmission par courroie (23 ; 33).

5. Unité selon la revendication 4, **caractérisée en ce que** lesdits moyens de transmission par courroie comprennent une seule courroie de transmission (26 ; 33).

6. Unité selon la revendication 5, **caractérisée en ce que** ladite courroie de transmission (26 ; 33) est une courroie crantée.

7. Unité selon la revendication 6, **caractérisée en ce que** ladite transmission mécanique (17, 23 ; 33) comprend également un arbre entraîné (19 ; 7) parallèle à l'axe (25) dudit arbre de sortie (27) ; lesdits moyens de transmission par courroie comprennent deux poulies (22 ; 32)(24), l'une ajustée sur ledit arbre entraîné (19 ; 7) et l'autre sur ledit arbre de sortie (27) ; et ladite courroie (26 ; 33) formant une boucle autour desdites deux poulies (22 ; 32)(24) ;
ledit arbre entraîné étant un arbre intermédiaire (19) s'étendant en parallèle à et sur une distance transversale dudit axe charnière (8); ladite transmission mécanique comprenant également des moyens de transmission (17) supplémentaires interposés entre ledit arbre intermédiaire (19) et lesdits moyens de préhension.

8. Unité selon la revendication 7, **caractérisée en ce que** lesdits moyens de transmission (17) supplémentaire sont des moyens de transmission par engrenage.

9. Unité selon la revendication 8, **caractérisée en ce que** lesdits moyens de transmission par engrenage comprennent une paire d'engrenages (16)(18) engrenés l'un avec l'autre.

10. Unité selon la revendication 6, **caractérisée en ce que** ladite transmission mécanique (17, 23 ; 33) comprend également un arbre entraîné (19 ; 7) parallèle à l'axe (25) dudit arbre de sortie (27) ; lesdits moyens de transmission par courroie comprenant deux poulies (22 ; 32)(24), l'une ajustée sur ledit arbre entraîné (19 ; 7) et l'autre sur ledit arbre de sortie (27) ; et ladite courroie (26 ; 33) formant une boucle autour desdites deux poulies (22 ; 32)(24) ; ledit arbre entraîné (7) s'étendant coaxialement avec ledit axe charnière (8) et lesdits moyens de préhension (13) étant porté par ledit arbre entraîné (7).

11. Unité selon la revendication 10, **caractérisée en ce que** lesdits moyens de transmission par courroie comprennent également un cylindre transporteur (35) situé à l'extérieur de ladite courroie (33) et le long d'une ramification (34) de la courroie (33).
